Europäisches Patentamt

**European Patent Office**

**Office européen des brevets**

(19)

(11) Publication number: **0 229 214**
**B1**

(12)

# EUROPEAN PATENT SPECIFICATION

(45) Date of publication of the patent specification:
**18.10.89**

(21) Application number: **86107334.4**

(22) Date of filing: **30.05.86**

(51) Int. Cl.⁴: **F16L 5/02**, F16L 13/14,
F16L 55/04

(54) Leak-free and vibration resistant pipe-flange coupling.

(30) Priority: **17.01.86  IT 2052186 U**

(43) Date of publication of application:
**22.07.87 Bulletin 87/30**

(45) Publication of the grant of the patent:
**18.10.89 Bulletin 89/42**

(84) Designated Contracting States:
**AT BE CH DE FR GB LI LU NL SE**

(56) References cited:
**DE-A- 2 924 641**
**FR-A- 2 179 523**

(73) Proprietor: **MURRAY EUROPE S.p.A., Via A. Volta, 17,**
**I-20090 Cusago(Milano)(IT)**

(72) Inventor: **Dalla Bona, Alfredo, Vicolo Bezzecca, 14/16,**
**I-20081 Abbiategrasso(IT)**

(74) Representative: **Lecce, Giovanni, Dott. Giovanni Lecce**
**& C. S.r.l. Via G. Negri 10, I-20123 Milano(IT)**

## Description

This invention refers to a leak-free and vibration resistant pipeflange coupling.

More in particular, this invention refers to a leak-free and vibration resistant pipe-flange coupling, particularly suited to being used in pressurised fluid circuits that are also subject to vibrations, as for example in the air conditioners and compressors mounted on vehicles.

In pipe-flange couplings which are required to maintain a stable, leak-free condition in time and withstand vibrations at any frequency, as occurs for example in the compressor circuits of car air conditioners, the present state of the art foresees that the components are to be welded.

This welding operation, particularly in the case of aluminium, or light alloy cast pipes, involves considerable problems in executing the weld and significant difficulties to ensure that a reliable coupling is achieved.

The main drawbacks are: sagging and burrs on the sealing surface; burning, or porosity in the weld caused by the use of deoxidisers; annealing of the base materials with a weakening of the structural rigidity and the toughness of the materials themselves, etc. In addition, during operation, the inevitable prolonged stress, as a consequence of the vibrations may crack a layer of melted material, breaking the seal.

DE-A 2 924 641 discloses a leak-free and vibration resistant pipe-flange coupling which consists of a flange having a through-hole and pipe inserted and fixed within said hole. The flange has in the inner surface of said through-hole circular grooves into which the pipe material expands. A ring of elastomeric material is arranged and compressed within one of said grooves and assures the seal between the pipe and the flange.

The object of the present invention is to improve the seal and the vibration resistance of the pipe-flange coupling comprising a flange having a through-hole and a pipe inserted into said hole.

Particularly, the object of the present invention is to provide a pipe-flange coupling having a stable, leak-free condition in time and a resistance to the vibrations at any frequency, particularly suited to being used in pressurized fluid circuits subjected to vibrations.

According to the present invention, a pipe-flange coupling having the above reported characteristics consists of a flange having a through-hole and a pipe inserted and fixed within said hole, both the flange and the pipe being made of aluminium, said flange having in the inner surface of said through-hole a first circular groove being closed and provided with a ring of elastomeric material, said ring assuring the seal between the pipe and the flange; a second circular groove arranged axially distant on one side of the first groove, wherein the pipe material is expanded by heading of the pipe into said second groove and maintains compressed said ring of elastomeric material in said first groove, and a third circular groove being open and arranged axially distant on the other side of the first groove at the end of said flange opposite the end where the pipe made of drawn aluminium is inserted into the through-hole, the edge of the said pipe being bent over and turned into said third groove.

The leak free and vibration resistant pipe-flange coupling of the present invention may be understood better from the following detailed description, where reference is made to the figures of the attached drawing which represent a preferred, illustrative, but non-limitative embodiment and where:

Figure 1 is a the schematic view of the longitudinal cross section of the pipe-flange coupling, according to this invention, before heading; and

Figure 2 represents the same view of figure 1 after heading.

The figures illustrate a general flange 1 with an assembly hole for a pipe 2 and sectioned along the centre-line of the said hole.

The flange 1 is preferably of light alloy, or aluminium, the pipe 2 is of drawn aluminium.

Two closed circular grooves 3 and 4 and one open circular groove 5 are made on the inside surface of the hole; the latter groove is made in correspondence to one end 6 of the said flange, which corresponds to the seal end.

A ring gasket 7 of elastomeric material is housed in the intermediate closed groove 4. Afterwhich the pipe 2 is fitted, to be made leak-free with a peripherical seal until it faces the sealing surface 6.

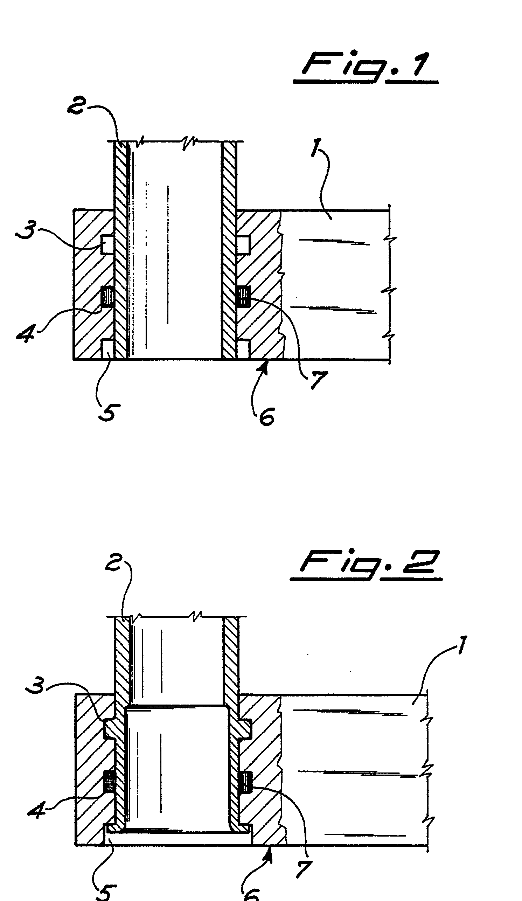

The pipe end is headed, while it is on the flange arranged as above, as shown in fig. 2, using a heading punch and expansion, a technique known as such.

The pipe is partially headed and completely a occupies the first closed groove 3, compressing the ring until fully filling, under load, the second closed groove 4 and finally turning over into the open groove 5. Thus, an unmovable coupling of the pipe inside the flange is obtained thanks to the mutual restraints and a perfect seal by the compressed elastomer ring.

## Claims

A leak free and vibration resistant pipe-flange coupling which consists of a flange (1) having a through-hole and a pipe (2) inserted and fixed within said hole, both the flange (1) and the pipe (2) being made of aluminium, said flange (1) having in the inner surface of said through-hole a first circular groove (4) being closed and provided with a ring of elastomeric material (7), said ring assuring the seal between the pipe (2) and the flange (1), and a second circular groove (3) arranged axially distant on one side of the first groove (4), wherein pipe material (2) is expanded by heading of the pipe into said second groove (3) and maintains compressed said ring of elastomeric material (7) in said first groove (4), characterized in that a third circular groove (5) being open is arranged axially distant on the other side of the first groove (4) at the end (6) of said flange (1) opposite the end where the pipe made of drawn aluminium is inserted into the through-hole, and that the edge of the said pipe (2) is bent over and turned into said third groove (5).

## Patentansprüche

Eine spaltlose und schwingungsfeste Flanschverbindung, die aus einem Flansch (1) besteht, der ein Durchgangsloch und ein Rohr (2) hat, das in dieses Loch eingesetzt und hier befestigt ist, sowohl der Flansch (1) als auch das Rohr (2) sind aus Aluminium hergestellt; besagter Flansch (1) hat an der Innenfläche des besagten Durchgangslochs einen ersten kreisförmigen Einschnitt (4), der geschlossen und mit einem Ring aus Elastomer (7) versehen ist, dieser Ring gewährleistet die Dichte zwischen dem Rohr (2) und dem Flansch (1), und ein zweiter kreisförmiger Einschnitt (3), der längs der Achse entfernt auf einer Seite des ersten Einschnitts (4) angebracht ist, in dem das Rohrmaterial (2) durch Stauchen des Rohrs in diesen zweiten Einschnitt (3) ausgedehnt wird, und wobei besagter Elastomerring (7) in dem besagten ersten Einschnitt (4) zusammengedrückt gehalten wird, dadurch gekennzeichnet, daß ein dritter kreisförmiger, offener Einschnitt (5) längs einer Achse entfernt auf der anderen Seite des ersten Einschnitts (4) am Ende (6) des besagten Flansches (1) gegenüber dem Ende angebracht ist, an dem das Rohr aus gezogenem Aluminium in das Durchgangsloch eingesetzt ist, und daß der Rand des besagten Rohrs (2) gebogen und in den besagten dritten Einschnitt (5) gedreht ist.

## Revendications

Un accouplement de bride-tuyau résistant aux vibrations et sans pertes qui consiste en une bride (1) ayant un trou de passage et un tuyau (2) introduit et fixé dans ledit trou, tant la bride (1) que le tuyau (2) sont en alluminium, ladite bride (1) a dans la surface intérieure dudit trou de passge une première rainure circulaire (4) étant fermée et dotée d'un anneau de matière élastomère (7), ledit anneau assure la fermeture entre le tuyau (2) et la bride (1), et une deuxième rainure circulaire (3) placée à une distance dans le sens axial sur un côté de la première rainure (4), où la matière du tuyau (2) est expansée par la mise de la tête dans ladite deuxième rainure (3) et maintient comprimé ledit anneau de matière élastomère (7) dans ladite première rainure (4), caractérisé par une troisième rainure circulaire (5) ouverte qui est placée à une distance dans le sens axial sur l'autre côté de la première rainure (4) à l'extrémité (6) de ladite bride (1) du côté opposé de l'extrémité où le tuyau en alluminium étiré est introduit dans le trou de passage, et que le bord dudit tuyau (2) est plié et tourné dans ladite troisième rainure (5).

_Fig.1_

_Fig.2_